# EUROPEAN PATENT SPECIFICATION

(11) **EP 1 603 093 B1**
(45) Date of publication and mention of the grant of the patent: **17.07.2013**
(21) Application number: 05015453.3
(22) Date of filing: 23.12.2003
(51) Int. Cl.: G07F 19/00, G07F 7/00, H04N 17/04

(54) **Cash dispensing automated banking machine display failure detection system and method**
Bargeldausgabe-Geldautomatenanzeigeausfalldetektionssystem und Verfahren
Système et procédé de détection d'échec d'un affichage de guichet automatique bancaire distributeur d'argent

(30) Priority: 26.12.2002 US 436848 P
(43) Date of publication of application: 07.12.2005
(62) Divisional of application: 03814945.6
(73) Proprietor: DIEBOLD, INCORPORATED, North Canton, OH 44720 (US)
(72) Inventor: Ferraro, Francesco, Piverone (TO) 10010 (IT)
(74) Representative: Meldrum, David James

(56) References cited:
- EP-A- 1 030 276
- US-A- 4 870 357
- US-A- 4 897 721
- US-A- 5 572 444
- US-A- 5 850 205
- US-A- 5 984 178

## Description

### TECHNICAL FIELD

This invention relates to cash dispensing automated banking machines. Specifically this invention relates to failure detection of an automated banking machine display module.

### BACKGROUND ART

Automated banking machines are well known in the prior art. Automated banking machines may include automated teller machines (ATMs) through which consumers may conduct banking transactions. Other types of automated banking machines may include devices which count or deliver cash or other items of value to a consumer, bank teller or other user, as well as point of sale (POS) terminals and other terminals which enable users to carry out transactions of value.

Some types of automated banking machines are used to dispense cash or other items such as tickets, travelers checks, coupons, scrip, wagering slips, vouchers, or other items of value. Some automated banking machines accept deposits in the form of envelopes, checks, cash, or other items. Some automated banking machines can be used for providing credit, making bill payments, or to debit or deposit funds in various accounts.

Automated banking machines typically include a user interface. The interface can be used to provide visual outputs to a user as well as to receive user inputs. A common output device for an interface is a visual display. A display module can be used to provide outputs and other information to a user. In some machines a display module may include a "touch screen" which enables a user to input instructions by bringing a finger adjacent to the screen of the display module. In machines that use a touch screen, the touch screen can serve as both an output device and an input device.

Many different types of displays can be used with regard to automated banking machines. The displays may be the conventional type or the touch screen type. Such machines may also use displays which are liquid crystal (LCD) or flat panel types, as well as CRT types. Monochrome displays can be used in some machines while color displays can be used in others.

EP 1 030 276 describes an automated banking machine having a touch screen. US 5 572 444 describes a method and apparatus for evaluating the degradation of a video display device. Single parameter test signals and patterns, generated either internally or externally to the video device, are displayed on the screen. A sensing device such as a CCD camera reads the screen and transmits the data to a processing unit. The processing unit reads and interprets the results in accordance with the received test codes.

### DISCLOSURE OF INVENTION

Typically, service personnel are informed of an automated banking machine display failure after a user, such as a customer, notifies their bank. Thus, there exists a need for diagnostic capability to detect image failure of an automated banking machine display. There further exists a need for display diagnostic capability that is reliable, compact, and low in cost. There further exists a need for diagnostic capability that is suitable for use with different types of automated banking machines displays.

Embodiments of the invention are defined in the accompanying claims.

An example of the disclosure of this invention can provide visual output device diagnostic capability.

An example of the disclosure of this invention can provide display nodule diagnostic capability.

An example of the disclosure of this invention can provide an automated banking machine.

An example of the disclosure of this invention can provide an automated banking machine with visual output device diagnostic capability.

An example of the disclosure of this invention can provide an automated banking machine with display module diagnostic capability.

An example of the disclosure of this invention can provide an automated banking machine with display module failure detection.

An example of the disclosure of this invention can provide an automated banking machine with image display capability detection.

An example of the disclosure of this invention can provide an automated banking machine with LCD failure detection.

An example of the disclosure of this invention can provide an automated banking machine with display failure detection that is simple and reliable in construction and operation.

An example of the disclosure of this invention can provide an automated banking machine with display failure detection that is low in cost.

An example of the disclosure of this invention can provide a method for detecting automated banking machine display module display capability.

An example of the disclosure of this invention can provide a method for detecting the failure of an automated banking machine display module to display an image.

According to an embodiment of the invention, there is provided an automated banking machine. The automated banking machine can include a display module failure detection arrangement. The display module can include an LCD. The arrangement can detect the capability of an LCD to show images. The arrangement can include a sensor device located adjacent an LCD panel. The sensor device can include a photo sensor device. The photo sensor device can be capable of sensing each color in a color sequence which may include a plurality of colors and/or patterns in a visual output area. The visual output area can be a small test area of the LCD panel. A program or subroutine operating in a controller of an automated banking machine can continuously supply signals operative to cause a color sequence or pattern to be displayed in the test area. Circuitry in the failure detection arrangement can be used to compare the colors and/or patterns to be produced in supplied sequence to the colors sensed by the photo sensor device. The circuitry can enable the machine to continuously check if an exact color and/or pattern test sequence was actually displayed. That is, the circuitry can enable the machine to check for display failure. Thus, a run time diagnostic can keep the LCD status monitored. Display module failure can be determined independent of the automated banking machine display module used.

In accordance with an embodiment of the invention, an automated banking machine controller or computer runs a program which can repeatedly submit signals to cause the same color sequence (e.g., blue, red, green) to be output in the LCD test area. The photo sensor device can sense the sequence colors actually displayed in the test area. The computer can be operative to compare the submitted color sequence with the sensed output sequence of colors. If the exact color sequence does not match then a display diagnostic error signal can be generated.

### BRIEF DESCRIPTION OF DRAWINGS

Figure 1 is an isometric view of an automated banking machine.
Figure 2 shows a front view of a display module failure detection arrangement.
Figure 3 shows a side view of the arrangement of Figure 2.
Figure 4 shows a view of a display module failure detection arrangement including a circuit card.
Figure 5 shows an exemplary form of a test color sequence.
Figure 6 shows a block diagram of an exemplary form of interrelated modules associated with a display screen diagnostic operation.
Figure 7 shows a block diagram of an exemplary form of a component arrangement associated with display module monitoring.

### BEST MODES FOR CARRYING OUT INVENTION

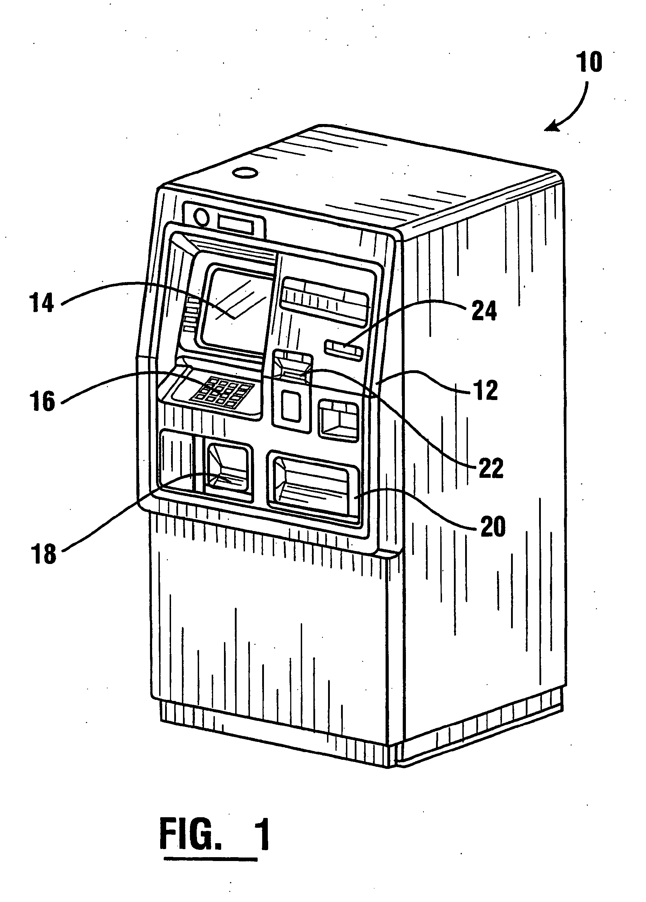

Referring now to the drawings and particularly to Figure 1, there is shown therein an isometric view of an exemplary automated banking machine generally indicated 10. Automated banking machine 10 is an ATM. However, it should be understood that the present invention maybe used in other types of automated banking machines, including currency counting units, currency acceptors, currency recyclers, depositories, scrip terminals, POS terminals, and similar type devices.

Automated banking machine 10 includes a fascia 12 which includes a user interface. The fascia includes an opening through which a display screen 14 of a display module may be viewed. A display screen is used for providing outputs such as instructions and messages to users of the machine. The fascia also has thereon a keyboard 16 through which the user may enter instructions.

The fascia also includes openings for other types of devices and mechanisms. In the example shown these include a depository opening 18 into which a user may place deposits. A currency delivery opening 20 is also provided through which currency can be delivered to the user. For example, cash (e.g., currency sheets) may be dispensed from an ATM to a user by a cash dispenser mechanism. The fascia may also include a card entry slot 22 wherein a user can input a debit or credit card which can be used to initiate operation of the ATM. The fascia may also include a receipt delivery opening 24 through which transaction receipts can be delivered to the user.

The exemplary automated banking machine may include numerous transaction function devices and one or more controllers that are operative to cause operation of the devices. An exemplary control system for an ATM is shown in U.S. Patent No. 6,505,177.

Of course this ATM architecture is exemplary and in other embodiments other approaches may be used.

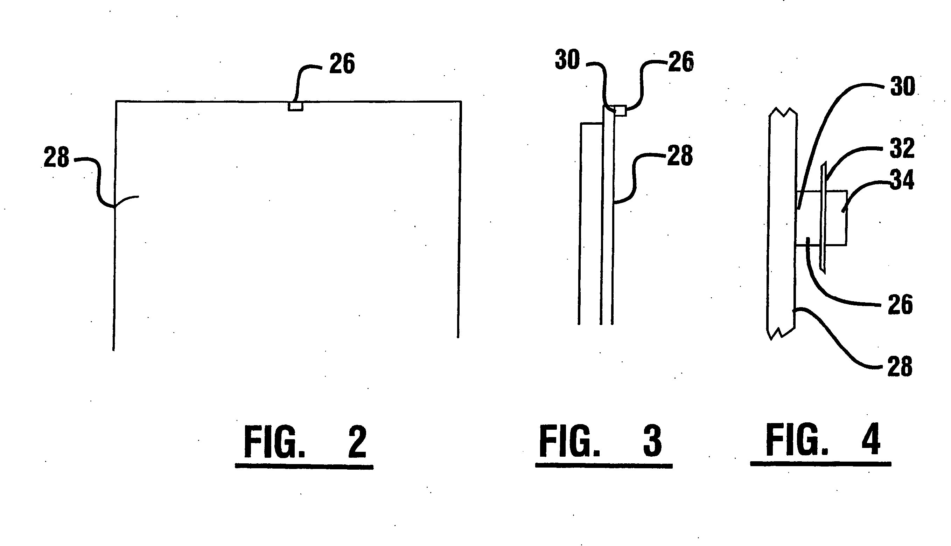

Figure 2 shows a front view of a display failure detection arrangement having at least one photo sensor device 26 is placed adjacent to a display screen 28, such as an LCD panel. Figure 3 shows a side view of the arrangement of Figure 2. An automated banking machine controller is operative to execute a display color diagnostic program. Computer readable media bearing computer executable instructions (e.g., software) can be operative to cause the controller or computer to carry out the diagnostic program. The exemplary programs may reside on or be loaded into memory from media such as a hard disk, CD-ROM, PROM, memory card, floppy disk or other media article.

An exemplary program can operate to cause signals normally operative to cause the same sequence which includes a color pattern or series(e.g., blue, red, green) to be continuously and repeatedly output in a display screen test area 30. Thus, an ATM display module can be continuously tested. The controller can send display instructions or signals to a display module to direct the displaying of a predetermined color pattern or sequence. A sequence can include an arrangement of single colors or an arrangement of plural same colors next to each other. Black/white sequences can be used. For example, a color sequence may include "black, white, black, white" or "red, green, blue" or "red, red, green, blue, blue, blue" or "green, black, red, blue, white, red, white, black." A predetermined color sequence may also include a certain number of first color type (e.g., two red) followed by a certain number of a second color type (e.g., three green). A pattern of plural same colors followed by plural other colors can be used. For example, a sequence may include a plurality of same first type colors (e.g., four blue) followed by a plurality of same second type colors (e.g., two red) followed by a plurality of same third type colors (e.g., three green). Of course this is exemplary and in other embodiments other colors and patterns may be produced.

The photo sensor device 26 may be of the type which is operative to sense colors which have been displayed in the screen test area 30 of the LCD. The photo sensor device may include a photo diode. The photo sensor device may be arranged to sense colors individually or plurally. That is, the photo sensor device may be operative to return a plurality of single colors or a single (or plural) pattern of plural colors to the ATM controller. The photo sensor device may be arranged to sense hues or properties of light by which a color is classified in reference to a spectrum. In some embodiments the sensor may be operative to sense colors and/or patterns that are output at separate times or simultaneously.

The photo sensor device can be of a size which corresponds to the size of the test area. For example, the photo sensor device may be of a size which permits sensing of a test color pattern the size of the test area. The test area can be a small area relative to the total LCD area. In an example of the present invention the test area can be a 4x4 mm square area. Of course detection may be used with test areas of smaller or larger size. The photo sensor device 26 can be part of a circuit card 32, e.g., LCD failure detection circuit card, as shown in Figure 4. The photo sensor device 26 can also include more than one photo sensor or other type sensing device. A sensor device can be located exterior of a display screen test area. That is, a sensor device can be positioned intermediate a display screen and an outside user area. A sensor device can also be disposed from or in contacting relationship with a display screen. In some exemplary embodiments one or more sensors may be positioned in an area of the ATM fascia adjacent an opening for the screen on the user interface. This enables the sensor to be positioned in underlying relation of the fascia so that the sensor is not subject to tampering or contamination. In other embodiments the one or more sensors may be positioned intermediate of the outer surface containing the liquid crystal or other display material, and an outer transparent surface through which an ATM user views the display. In other alternative examples one or more sensors may be embedded in the transparent members through which a user views the indicia output by the display.

Other approaches may be used in other examples. For example in some embodiments one or more light directing devices such as mirror surfaces may be positioned in or adjacent to the line of sight for the display. Such mirror surfaces may be used to direct light in the test area to one or more sensors positioned outside the line of sight of the user. In some embodiments a partially silvered mirror surface may be employed so that the test area of the display from which light is detected may still be viewed by a user. In other embodiments, fiber optic strands or other light guides may be used to direct light from the display to one or more sensors. Of course in other examples other light directing devices or light guides may be used. In still other embodiments multiple disposed sensors and/or test areas may be used. For example, in some embodiments the display may be comprised of one or more back lights which serve as a light source positioned behind the display, and one or more layers of liquid crystal or other material may be positioned in the display between the light source and the user. In such embodiments, sensors may be positioned adjacent to one or more components so that sensing is conducted to determine if a particular component is operating properly. For example, a sensor may be positioned adjacent to the light source so as to sense light directly therefrom. Such a sensor may be usable to determine that a light source failure has occurred, rather than a failure of a component of the display overlying the light source. Alternatively or in addition, sensors may be positioned within or adjacent to specific layers of material that produce various aspects of the display output such as each color component. This may enable sensing each of the component layers for operability independently.

In some alternative embodiments multiple disposed test areas may be used. For example, multiple test outputs may be sequentially or simultaneously produced in disposed areas of the display and sensed by appropriate sensors. This may include for example, producing test outputs in disposed areas along one side of a display, or on different sides, adjacent the corners of the display or in other suitable areas. In other alternative embodiments, test areas may be sensed in areas more central to the display. This may be done for example through the use of small embedded fiber optic strands that conduct output light from an area of the display within the line of sight to one or more remote sensors outside the user's line of sight. Such testing may have the advantage that it enables testing for outputs in more central areas of the display and/or in more areas. Testing in some embodiments may be made inconspicuous such as by outputting and sensing test sequences including colors and/or patterns when the ATM is not in use. Alternatively or in addition, one or more controllers may be programmed to run the test sequence at certain times during machine operation so that the test sequence is not likely to be noticed by a user. Alternatively in some embodiments which include a touch screen, the controller may be programmed to output and sense the test sequence in the area of the display that underlies a user's finger when the user is sensed as touching the exterior surface of the touch screen. Of course these approaches are exemplary, and in other examples other approaches may be used.

In an exemplary embodiment the controller is operative to compare the submitted color sequence with the sensed output sequence of colors. For example, the first color in the known sequence can be compared with the first color in the sensed sequence. This comparison can be continued for all of the individual color entries in the color sequence. Alternatively, the controller may be arranged to simultaneously compare a number of colors, e.g., all of the colors in the color sequence. The controller may also be operative to receive individual sensed colors from the photo sensor or other sensor device, then arrange the received color information into a complete color sequence prior to simultaneous comparison of the entire two sequences. Thus, individual colors, partial color sequences, or complete color sequences may be compared.

If a known submitted color (or a color sequence) does not exactly match a corresponding sensed display color (or a color sequence), then a display diagnostic error can be generated. That is, if not every submitted color matches a corresponding displayed color in the ordered sequence of colors, then the controller is operative to generate an appropriate error message or other signal. The display color diagnostic program is implemented and executed by one or more controllers to continuously check the display for failure to produce a proper color. The failure may be the result of the display to produce proper images or any display. Thus, the failure of an ATM LCD can be detected and service personnel (e.g., at a service center) can be informed of the failure. This maybe done in some examples in the manner shown in U.S. Patent No. 5,984,178.

The display color diagnostic arrangement may be used to detect failures in LCD functions such as red, blue, green fundamental colors (e.g., with the three most significant bits); pixel clock; vertical sync; horizontal sync; and DE.

The ATM can also include a dimmer sensor 34 operative to sense the level of ambient light shining on the display screen. The dimmer sensor is preferably placed close to the screen to more accurately sense the level of ambient light associated with the display screen. Too much or too little ambient light (and at an undesirable angle) can make it difficult for a user of the machine to read the output of the display screen. For example, a high (bright) level of light may cause screen glare. In an exemplary embodiment the ATM controller is operative to receive signals indicative of the measured amount of ambient light from the dimmer sensor and compare it to an acceptable range. The ATM controller may be operative to adjust the display brightness and/or contrast to compensate for an unacceptable level of light sensed by the ambient light sensor. This may be done for example by adjusting the output of back lighting, the properties of the material in the display for passing or reflecting light and other programmed parameters. Thus, the ATM is operative to maintain a display output which is readable to a user of the ATM.

In an exemplary embodiment the same display failure detection circuit card which includes a photo sensor can also include one or more additional sensors, such as a dimmer (ambient light) sensor 34. Figure 4 shows a view (top or side) of an arrangement including a photo sensor device 26, display screen 28, screen test area 30, circuit card 32, and dimmer sensor 34. As shown, a photo sensor can be located on a circuit card adjacent to and/or opposite a dimmer sensor. That is, a photo sensor can be on one side of the card facing the display screen and a dimmer sensor can be on an opposite side of the card facing away from the display screen. Thus, both the photo sensor and the dimmer sensor can be positioned adjacent the same common screen test area. Of course more than one of the same sensor type or different types of sensors may be used. The sensors can also be adjacent to a display screen at a location not accessible to a user of the machine. For example, a screen test area may be generally hidden from the view of ATM users by fascia structure.

The photo sensor device 26 may also be of the type which is operative to sense the brightness (light level) output of an LCD. The ATM can be operative to use a brightness sequence in a manner similar to the use of a color sequence. The photo sensor may be operative to sense the brightness of a displayed test output sequence (e.g., black, black, white, black) in a screen test area. The ATM can also be operative to compare the sensed brightness sequence in a manner similar to the comparison of the sensed color sequence to determine if the display module is functioning properly. A comparison can be made of the sensed display brightness output, with a stored acceptable display brightness level or range. For example, the sensed brightness of one or more outputs in the displayed sequence can be compared through operation of one or more controllers with the corresponding or ordered one or more submitted brightness outputs from the stored sequence. The ATM controller may also be operative to compare the brightness pattern of an entire displayed sequence with the known brightness pattern of the entire stored sequence. For example, in the sequence "black, black, white, black, white, black" the first sensed output "black" can be compared with the first submitted "black," which has a known brightness (or darkness) level. If the first sensed "black" falls within an acceptable range of the first submitted "black" then the second sensed output "black" can be compared for acceptability. The sequence comparison can continue until completion. That is, in this example, until each of the four "black" and two "white" have been compared to their corresponding standard. The sequence comparison can be repeated continuously or conducted periodically. Furthermore, different degrees or shades of "black" and/or "white" maybe used, e.g., grays. Colors different than black and white may also be used (e.g., blue, red, green). Still, other examples may compare the total amount of brightness sensed in a display sequence with the total amount of sequence brightness submitted for display. That is, a combined amount of sensed light maybe compared to the combined amount of light submitted for display. A determined brightness output level outside of an acceptable range can result in the diagnostic program generating a display module diagnostic error. Thus, a run time diagnostic can keep an ATM display status continually monitored.

One or more sensors (e.g., photo sensor device) may also be used to check lamp or back light efficiency. Also, the same sensor (or sensors) used for display module (e.g., LCD) failure detection can also be used in lamp efficiency checking. A controller or computer may be programmed to execute a diagnostic program to automatically check the brightness value of one or more back light lamps. Checking can be carried out continually or on a predetermined frequency. For example, the diagnostic program may perform a back light efficiency check once a week (i.e., once every seven days) using a photo sensor device at an ATM. A check can be performed with the lamps at maximum brightness. This may involve changing (e.g., raising) the current brightness level of an LCD screen. An unacceptable maximum lamp brightness level can be programmed at a fixed level or as a predetermined percentage of the initial (or expected) maximum lamp brightness level. For example, it may be time to change a lamp when its measured maximum brightness level is 50% or less of the initial maximum brightness level. That is, a 50% or more reduction in maximum brightness may be the level predetermined as the end of lamp life. Of course other brightness levels (maximum or not maximum) or percentages may be used in determining an end of life for one or more lamps. Additionally, some lamps in the same machine may have different end of life brightness levels. One or more controllers in the ATM may be programmed to cause the machine to test this aspect of display operation and to determine based on the outputs sensed whether there is a problem. Upon or responsive to a determination of an inefficient, unacceptable, defective, or failed lamp, a servicing request signal can be initiated, such as by the controller or a computer. The signal (which may be associated with one or more particular lamps) may be sent to a service center. Thus, a machine having need of lamp (or module) replacement can have the necessary authorities, such as service personnel, automatically notified or advised. Additionally, if an ATM is determined as having a back lighting brightness (or a display) unacceptable for proper customer usage of the ATM, then the machine may be automatically taken out of service or shutdown.

An example employing certain aspects of the present invention permits certain existing ATMs to be retrofitted to include the display failure detection. That is, an existing ATM may be modified to include programming of one or more controllers which execute a display diagnostic program in association with one or more photo sensors adjacent a display screen test area. An ATM's diagnostic application can also be modified to link with a display diagnostic arrangement for generation of diagnostic errors and record keeping in one or more data stores associated with one or more controllers.

In an exemplary form of operation, an automated banking machine controller, which may be alternatively referred to as a computer, runs a program which can repeatedly submit signals which would normally cause output of the same color sequence in a display screen test area. The photo sensor device senses the colors of the color sequence which were actually displayed in the test area. The exemplary photo sensor device can sense individually displayed colors. For example, after a first sequence color (e.g., blue) is displayed, the sensor device can sense the first color (e.g., blue) being displayed. The sensor device can then detect the next sequence color displayed (which may be a color out of the sequence order). The photo sensor device is operative to cause signals corresponding to the sensed information to be delivered to the controller. Alternatively, the sensed information can be first stored in memory prior to transfer to the controller for comparison or analysis. For example, sensed data may be stored in a data store until an entire sequence (e.g., ten individual colors) has been attempted to be output through the display. The computer and/or program is operative to compare the attempted submitted color sequence (which can correspond to a known standard color sequence) with the actual sensed color sequence. If the compared color sequences do not match or otherwise exhibit a proper relationship, then a display diagnostic error can be generated. Alternatively or in addition, one or more controllers may be programmed to analyze the data to determine the nature of the failure. This may be useful for purposes of remedial service. For example, the controller can deliver information indicating back light failure, particular display component failures or other useful service information. Thus, one or more fault messages can be generated responsive to a malfunctioning display module. Furthermore, in some embodiments a display module can be continuously tested for rapid notification of when a malfunction has occurred. This ability can increase the availability or uptime of an ATM.

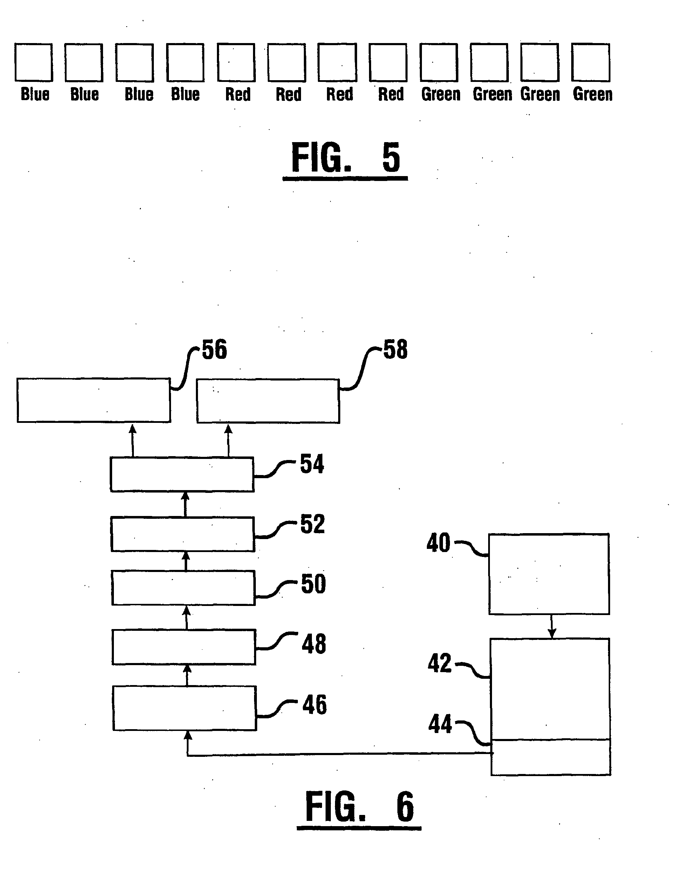

In an operative example, a repeating test color sequence may consist of "blue, blue, blue, blue, red, red, red, red, green, green, green, green," presented in a rectangular pattern as shown in Figure 5. In the example, a photo sensor device includes at least one photo sensor which can sense at least the colors "blue," "red," and "green." It should be understood that in this embodiment the rectangular pattern of color is output in the same position on the display in different hues at different times. The program may be configured so that individual colors are compared. That is, the first sensed output of the sequence can be compared with a standard for"blue." If the first sensed output is determined to be within the acceptable range of "blue" then the program moves on to compare the second sensed output. If the second sensed output is also determined to be within the acceptable range of "blue" then the program can continue to compare the next sensed output, etc. The acceptable range of "blue" for the first submitted "blue" may differ than the acceptable range of "blue" for the second submitted "blue." That is, the first and second colors in the color sequence maybe different tones of blue. Likewise, other colors may be of different tones or hues. Of course in some embodiments all blues (and reds and greens) may be identical. If the first sensed output of the color sequence falls outside an acceptable level or range of the first submitted "blue" then the ATM is operative to generate a display diagnostic error signal.

Alternatively, the comparison arrangement may involve simultaneously comparing a sensed pattern of colors to the known color sequence. For example, the individually sensed colors could be temporarily stored until the sensing of the entire sequence is completed, then the entire sensed sequence can be compared to the known color sequence. The comparison may be of the individual sequence entries or the comparison may be of plural sequence entries. That is, the comparison may involve simultaneously comparing all of the entire sensed color sequence with the known color sequence.

The color sequence comparison may occur in a diagnostic application associated with testing the operability of one or more photo sensors. The color sequence set submitted for repeating display can be separate from (or identical to) the color sequence set used for comparison for testing proper operation of the display. The diagnostic application can compare the sensed color sequence for a match of the known color sequence. The computer may be programmed to identify one or more sensor problems, and may be operative to generate signals indicative thereof.

A timing mechanism may be used to correspond sequence submission with sequence sensing. Alternatively, a photo sensor device can be initiated to sense a numbered pattern of colors without regard to a corresponding time. For example, if the color sequence "blue, blue, blue, blue, red, red, red, red, green, green, green, green" is used, then there are twelve color entries or placement orders in the sequence. The photo sensor device can be operated to sense a pattern of twelve consecutive colors. The pattern does not have to start with blue. The pattern can start at any of twelve entry points in the color sequence. That is, the ATM can view the known color sequence as a continuous loop. An ATM computer can be operative to use pattern recognition to determine whether the sensed color pattern matches the known color sequence. That is, the ATM can be operative to recognize that the sensed display pattern "red, green, green, green, green, blue, blue, blue, blue, red, red, red" is a correct sequence match, and the display module is operating properly.

The testing of the display module may continue repeatedly to continually update its display status. Thus, the display status may be known in real time. Alternatively, testing may be done at other times, such as periodically on a timed basis and/or in relation to transaction activity conducted at the ATM.

Figure 6 shows a block diagram of interrelated hardware and/or software modules in an example of a display screen diagnostic operation. A test sequence is output from module 40 to the display module 42. A video card including a controller may be used to output a test color sequence, for example. The display module can be an ATM display module. One or more sensors 44 adjacent the display screen can detect each displayed color. Sensor data can be sent to a number of other hardware or software modules, such as modules related to HW fault detection 46, USB stack 48, USB device driver 50, I/O handler 52, and a DLL associated with managing module interfaces 54. Failure results can be managed by a machine wide diagnostic software application 56. The failure results can also be logged into a logging software application 58.

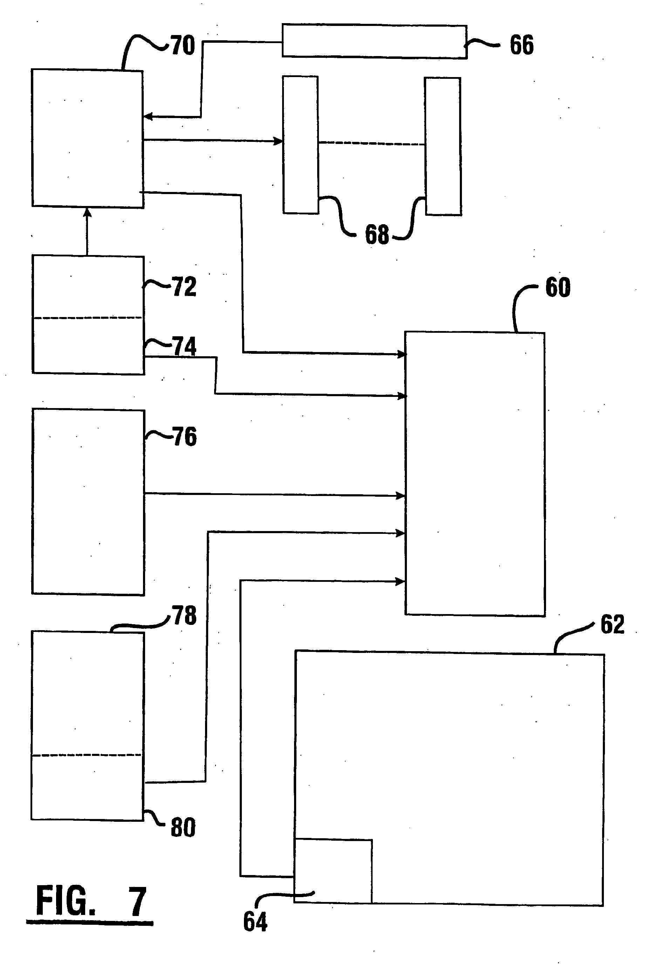

Figure 7 shows a block diagram of a component arrangement example for display module monitoring. As shown, the functionality of the display screen may be only one of many display module features which are monitored. A controller represented as CPU 60 can be used to coordinate and control monitoring of a display module. The CPU may provide for communication therewith via USB. As previously described, a display screen 62 can have one or more sensors, such as a photo sensor 64 (e.g., photo diode) adjacent one or more test areas thereof. The photo sensor is able to distinguish a specific color from a range of different colors (including no color) which may be displayed in the test area.

Light sensors 66, which may include one or more dimmer sensors, are each operative to sense a level of light. Certain light sensors (e.g., a dimmer sensor) can be associated with the display screen 62 while other sensors can be associated with determining whether specific ATM lamps 68 (i.e., lamp no. 1 to lamp no. 12) are properly operating (e.g., emitting sufficient light). The light sensor data can proceed to an inverter 70 prior to entering the CPU 60. A DC/DC converter 72 and/or a VDC (video display control) monitor 74 may also be used. The VDC monitor can assist in establishing proper display module settings for optimum viewability.

The CPU 60 may also be operatively connected with a DVI receiver 76. The receiver 76 may be operative to enable viewing of video out from the CPU. A fan sub module 78 and a temperature sensor 80 are also shown. Operation of a display module fan can be responsive to the inner environment of a display module reaching a predetermined temperature. Thus, the component arrangement of Figure 7 can provide for the monitoring and control of an ATM display module.

As described herein, an automated banking machine is operative to test a display module for display failure. The testing can determine whether the display module fails to produce an acceptable display output. A predetermined color sequence can be sent to the display module. A sensor device positioned adjacent the display module screen can be operative to sense displayed colors. A machine controller can determine whether the display module actually displayed the color sequence based on the signals sent. A display module error signal can be generated by the controller responsive to the display module failing to display the proper color sequence. The testing of the display module may continue repeatedly and/or automatically to continually update its display status.

It should be understood that although the exemplary embodiments have been described with reference to a sequence comprising a plurality of colors output in a rectangular pattern within a test area, other sequences which include other patterns may be used in alternative embodiments. These may include pattern designs of varying geometric shapes and color patterns or orders of presentation. Such geometric shapes and colors may be sensed, recognized and analyzed as part of a sequence. Alternatively or in addition, sequences may include changing or moving patterns which can be sensed and analyzed through one or more controllers. Of course these approaches are exemplary, and in other examples other approaches may be used.

In some exemplary embodiments of ATMs, the principles described herein may be used for purposes of not only testing display functions but also other ATM functions. For example, in some embodiments the ATM may incorporate certain types of transaction function devices that are not totally dependent on the ATM for operational capability. Such a device might include, for example, a module or subsystem that is operative to cause a user to be credited with value in a remote utility account, such as an account that is used to pay for phone service at a phone company. The ATM may be configured to enable users to transfer value into such accounts. The ATM may be configured so that when the subsystem that provides this function is operational, such as, for example, able to communicate with one or more remote systems to carry out its intended function, a sequence is output in a test area of the screen. Detection and analysis of the sequence can be used to verify that the subsystem is operational. Variations in the sequence may also be used in some embodiments to indicate operational status conditions or properties of the subsystem. In some embodiments aspects of the sequence may be responsive to the remote system such as discontinuing or otherwise changing the sequence responsive to remote system status. One or more controllers in the ATM maybe operative to monitor and analyze the sequence, and adjust or control operational properties of the ATM in response thereto, such as not offering the related transactions when the subsystem is not available.

Alternatively the principles described herein may be used in some embodiments to indicate the operational characteristics of devices or software functions of the ATM in addition to the display. For example in some ATM embodiments, such as some described in the incorporated disclosure, screen display data may be based on programs that are operationally distinct from the programs that directly cause operation of ATM transaction function devices. Alternatively, some ATM software configurations may include application software that is provided by an entity other than the entity that manufactured the ATM. In such embodiments the ATM controller may be programmed to monitor the status of one or more devices and to produce as a result thereof one or more sequences on the one or more test areas or windows of the display that is not controlled by the application. In some embodiments the test sequence may be indicative of device status data as well as the colors or patterns that test operability of the display. By monitoring the output sequence in the one or more test areas and feeding back the sensed information to one or more controllers, the ATM is enabled to monitor the operational status of one or more transaction function devices as well as the display. This may enable detection of problems prior to the occurrence of any failed transactions, such as a cash dispensing transaction. Alternatively or in addition, in some embodiments such features may be used to verify that certain transaction function devices, or subsystems are functioning properly, and that if problems occur that they reside with hardware or software other than that which is associated with the output sequence. This could include, for example, a problem with the application software. Of course this approach is exemplary of many that may be used.

Thus the exemplary display module failure detection system and method can achieve one or more of the above-stated objectives, eliminate difficulties encountered in the use of prior devices and systems, solve problems, and attain the desirable results described herein.

In the foregoing description certain terms have been used for brevity, clarity and understanding. However, no unnecessary limitations are to be implied therefrom because such terms are for descriptive purposes and are intended to be broadly construed. Moreover, the descriptions and illustrations herein are by way of examples and the invention in not limited to the details shown or described.

In the following claims any feature described as a means for performing a function shall be construed as encompassing any means capable of performing the recited function, and shall not be deemed limited to the means shown or described herein for performing the recited function or mere equivalents thereof.

Having described the features, discoveries and principles of the invention, the manner in which it is constructed and operated and the advantages and useful results attained; the new and useful structures, devices, elements, arrangements, parts, combinations, systems, equipment, operations, methods and relationships are set forth in the appended claims.

## Claims

1. An automated banking machine apparatus (10) comprising:
a user interface, wherein the user interface includes at least one input device (16) and at least one output device (42),
wherein the at least one output device includes a display device comprising a display screen (14, 28, 62);
at least one cash dispenser;
at least one display sensor (26, 44, 64),
wherein the at least one display sensor is operative to sense outputs displayed in at least one test area (30) of the display screen;
at least one controller (60),
wherein:
the at least one controller is in operative connection with the at least one cash dispenser, the display device and the at least one display sensor,
the at least one controller is operative to instruct the display device to display at least one sequence of colors in a particular order in the at least one test area of the display screen, and the at least one controller is operative to determine whether the at least one sequence of colors was displayed so as to match the particular order, and responsive to a negative determination the at least one controller is operative to cause a display diagnostic error signal to be generated;
an automated banking machine fascia (12),
wherein the at least one display sensor underlies the fascia;
at least one light source that is operative to backlight the display device,
wherein the at least one light source is in operative connection with the at least one controller, and
wherein the at least one controller is operative to cause changes in output by the at least one light source;
at least one ambient light sensor (34, 66) in operative connection with the at least one controller,
wherein the at least one controller is operative to cause a change in output of the at least one light source responsive to changes in light sensed by the at least one ambient light sensor; and wherein the at least one ambient light sensor is disposed in overlying relation of the at least one display sensor.

2. The apparatus according to claim 1 wherein the at least one sequence comprises a plurality of different colors, wherein the at least one controller is operative to determine if the outputs in the at least one test area correspond to the at least one sequence.

3. The apparatus according to claim 2 wherein the at least one controller is operative to determine if outputs in the at least one test area correspond to a sequence of at least three colors.

4. The apparatus according to claim 1 wherein the at least one controller is operative to test the at least one light source by directing the at least one light source to output an intensity, and to sense output of the at least one light source with the at least one display sensor, and to determine responsive to the at least one light source output responsive to the directed intensity, whether the at least one light source requires replacement.

5. The apparatus according to claim 4 wherein testing the at least one light source includes the controller directing the at least one light source to produce maximum light output.

6. The apparatus according to claim 4 or claim 5 wherein the at least one controller is operative responsive to determining the at least one light source requires replacement, to cause a message to be sent to a remote servicer.

7. The apparatus according to any preceding claim wherein the controller is operative responsive to determining that the outputs in the test area do not correspond to the at least one sequence to cause a message to be sent to a remote servicer.

8. The apparatus according to any preceding claim wherein the at least one sequence comprises a changing pattern of color ordering.

9. The apparatus according to claim 8 wherein the at least one sequence comprises a moving pattern comprising different colors.

10. The apparatus according to any preceding claim wherein the at least one display sensor is operative to sense display outputs through a mirror.

11. The apparatus according to any preceding claim wherein the at least one display sensor is operative to sense display outputs through at least one light directing device.

12. The apparatus according to claim 11 wherein the at least one light directing device comprises a fiberoptic strand.

13. The apparatus according to any preceding claim wherein the display screen comprises a touch screen, and wherein at least one test area underlies a user-touchable area of the touch screen.

14. The apparatus according to any preceding claim and further comprising a plurality of transaction function devices, wherein the at least one controller is in operative connection with the plurality of transaction function devices and wherein the at least one controller is operative to vary the at least one sequence responsive to a condition of at least one transaction function device other than the display device.

15. A method comprising:
(a) operating at least one controller (60) in an automated banking machine (10) including a cash dispenser, to instruct a display (14, 28, 62) on a user interface of the machine to produce outputs in at least one test area (30) of the display, wherein the outputs comprise at least one sequence of colors in a particular order, the automated banking machine comprising an automated banking machine fascia (12), at least one light source adapted to backlight the display, and at least one ambient light sensor (34, 66) in operative connection with the at least one controller, wherein at least one display sensor (26, 44, 64) underlies the fascia, and wherein the at least one ambient light sensor is disposed in overlying relation of the at least one display sensor;
(b) sensing display outputs in the at least one test area of the display with the at least one display sensor;
(c) analyzing the display outputs through operation of the at least one controller to determine if the display is functioning properly by determining whether the at least one sequence of colors was displayed so as to match the particular order;
(d) responsive to a negative determination in (c), generating a diagnostic error signal; and
(e) the at least one controller causing a change in output of the at least one light source responsive to changes in light sensed by the at least one ambient light sensor.

16. The method according to claim 15 wherein the at least one output comprises at least one pattern.

17. The method according to claim 15 or claim 16 wherein in (a) the controller is operative to instruct the display to output a level of light, and wherein in (c) the at least one controller is operative to determine if at least one light source associated with the display requires replacement.

18. The method according to any of claims 15 to 17 wherein the at least one controller is operative to execute at least one software application producing outputs through the display, wherein in (a) the at least one test area does not include outputs produced responsive to the at least one application.

## Patentansprüche

1. Bankautomat (10), der Folgendes umfasst:
eine Benutzerschnittstelle, wobei die Benutzerschnittstelle mindestens ein Eingabegerät (16) und mindestens ein Ausgabegerät (42) aufweist,
wobei das mindestens eine Ausgabegerät eine Anzeigevorrichtung aufweist, die einen Bildschirm (14, 28, 62) umfasst;
mindestens eine Geldausgabevorrichtung;
mindestens einen Anzeigesensor (26, 44, 64);
wobei der mindestens eine Anzeigesensor dazu dient, Ausgaben, die in mindestens einem Testbereich (30) des Bildschirms angezeigt werden, zu erfassen;
mindestens ein Steuergerät (60),
wobei:
das mindestens eine Steuergerät in Wirkverbindung mit der mindestens einen Geldausgabevorrichtung, der Anzeigevorrichtung und dem mindestens einen Anzeigesensor steht,
das mindestens eine Steuergerät dazu dient, der Anzeigevorrichtung mitzuteilen, mindestens eine Farbsequenz in einer bestimmten Reihenfolge in dem mindestens einen Testbereich des Bildschirms anzuzeigen, und
das mindestens eine Steuergerät dazu dient festzustellen, ob die mindestens eine Farbsequenz angezeigt wurde, so dass die bestimmte Reihenfolge eingehalten wurde, und als Reaktion auf eine negative Feststellung dient das mindestens eine Steuergerät dazu, ein zu erzeugendes Diagnose-Fehlersignal bei der Anzeige zu bewirken;
eine Instrumententafel des Bankautomaten (12),
wobei der mindestens eine Anzeigesensor sich unter der Instrumententafel befindet;
mindestens eine Lichtquelle, die dazu dient, die Anzeigevorrichtung zu hinterleuchten,
wobei die mindestens eine Lichtquelle sich in Wirkverbindung mit dem mindestens einen Steuergerät befindet, und
wobei das mindestens eine Steuergerät dazu dient, Veränderungen bei der Leistung durch die mindestens eine Lichtquelle zu bewirken;
mindestens einen Umgebungslichtsensor (34, 66) in Wirkverbindung mit dem mindestens einen Steuergerät,
wobei das mindestens eine Steuergerät dazu dient, eine Veränderung bei der Abgabe der mindestens einen Lichtquelle als Reaktion auf Veränderungen bei dem Licht, das von dem mindestens einen Umgebungslichtsensor erfasst wird; und
wobei der mindestens eine Umgebungslichtsensor in überlagernder Beziehung zu dem mindestens einen Anzeigesensor angeordnet ist.

2. Vorrichtung nach Anspruch 1, wobei die mindestens eine Sequenz mehrere verschiedene Farben umfasst, wobei das mindestens eine Steuergerät dazu dient festzulegen, ob die Abgaben in dem mindestens einen Testbereich der mindestens einen Sequenz entsprechen.

3. Vorrichtung nach Anspruch 2, wobei das mindestens eine Steuergerät dazu dient festzustellen, ob Abgaben in dem mindestens einen Testbereich einer Sequenz von mindestens drei Farben entsprechen.

4. Vorrichtung nach Anspruch 1, wobei das mindestens eine Steuergerät dazu dient, die mindestens eine Lichtquelle zu testen, indem die mindestens eine Lichtquelle angewiesen wird, eine Intensität abzugeben und die Abgabe der mindestens einen Lichtquelle mit dem mindestens einen Anzeigesensor zu erfassen und als Reaktion auf die Abgabe der mindestens einen Lichtquelle als Reaktion auf die angegebene Intensität festzustellen, ob die mindestens eine Lichtquelle zu ersetzen ist.

5. Vorrichtung nach Anspruch 4, wobei das Testen der mindestens einen Lichtquelle das Steuergerät umfasst, das die mindestens eine Lichtquelle anweist, eine maximale Lichtleistung zu erzeugen.

6. Vorrichtung nach Anspruch 4 oder Anspruch 5, wobei das mindestens eine Steuergerät dazu dient, als Reaktion auf die Feststellung, ob die mindestens eine Lichtquelle zu ersetzen ist, eine Nachricht zu bewirken, die an einen Remote-Servicer zu schicken ist.

7. Vorrichtung nach einem der vorhergehenden Ansprüche, wobei das Steuergerät dazu dient, als Reaktion auf die Feststellung, dass die Leistungen in dem Testbereich nicht der mindestens einen Sequenz entsprechen, eine Nachricht zu bewirken, die an einen Remote-Servicer zu schicken ist.

8. Vorrichtung nach einem der vorhergehenden Ansprüche, wobei die mindestens eine Sequenz ein wechselndes Muster der Farbanordnung aufweist.

9. Vorrichtung nach Anspruch 8, wobei die mindestens eine Sequenz ein sich bewegendes Muster mit verschiedenen Farben umfasst.

10. Vorrichtung nach einem der vorhergehenden Ansprüche, wobei der mindestens eine Anzeigesensor dazu dient, Bildschirmausgaben durch einen Spiegel zu erfassen.

11. Vorrichtung nach einem der vorhergehenden Ansprüche, wobei der mindestens eine Anzeigesensor dazu dient, Bildschirmausgaben durch mindestens eine Lichtführungsvorrichtung zu erfassen.

12. Vorrichtung nach Anspruch 11, wobei die mindestens eine Lichtführungsvorrichtung einen Glasfaserstrang aufweist.

13. Vorrichtung nach einem der vorhergehenden Ansprüche, wobei der Bildschirm einen Berührungsbildschirm aufweist und wobei mindestens ein Testbereich sich unter einem vom Benutzer berührbaren Bereich des Berührungsbildschirms befindet.

14. Vorrichtung nach einem der vorhergehenden Ansprüche, die ferner mehrere Transaktionsfunktionsvorrichtungen aufweist, wobei das mindestens eine Steuergerät sich in Wirkverbindung mit den mehreren Transaktionsfunktionsvorrichtungen befindet und wobei das mindestens eine Steuergerät dazu dient, die mindestens eine Sequenz als Reaktion auf eine Bedingung mindestens einer Transaktionsfunktionsvorrichtung, die nicht die Anzeigevorrichtung ist, zu variieren.

15. Verfahren, umfassend:
(a) das Betätigen mindestens eines Steuergeräts (60) in einem Bankautomaten (10), einschließlich einer Geldausgabevorrichtung, um einer Anzeige (14, 28, 62) an einer Benutzerschnittstelle des Automaten mitzuteilen, Ausgaben in mindestens einem Testbereich (30) der Anzeige zu erzeugen, wobei die Ausgaben mindestens eine Farbsequenz in einer bestimmten Reihenfolge aufweisen, wobei der Bankautomat eine Instrumententafel des Bankautomaten (12), mindestens eine Lichtquelle, die geeignet ist, die Anzeige zu hinterleuchten, und mindestens einen Umgebungslichtsensor (34, 66) in Wirkverbindung mit dem mindestens einen Steuergerät umfasst, wobei mindestens ein Anzeigesensor (26, 44, 64) sich unter der Instrumententafel befindet und wobei der mindestens eine Umgebungslichtsensor in überlagernder Beziehung zu dem mindestens einen Anzeigesensor angeordnet ist;
(b) das Erfassen von Bildschirmausgaben in dem mindestens einen Testbereich der Anzeige mit dem mindestens einen Anzeigesensor;
(c) das Analysieren der Bildschirmausgaben durch das Betätigen des mindestens einen Steuergeräts, um festzustellen, ob die Anzeige ordnungsgemäß arbeitet, indem festgestellt wird, ob die mindestens eine Farbsequenz angezeigt wurde, so dass die bestimmte Reihenfolge eingehalten wurde;
(d) als Reaktion auf eine negative Feststellung in (c) Erzeugen eines Diagnosefehlersignals; und
(e) das Bewirken einer Veränderung der Leistung der mindestens einen Lichtquelle als Reaktion auf die Lichtveränderungen, die von dem mindestens einen Umgebungslichtsensor erkannt wird, durch das mindestens eine Steuergerät.

16. Verfahren nach Anspruch 15, wobei die mindestens eine Ausgabe mindestens ein Muster aufweist.

17. Verfahren nach Anspruch 15 oder Anspruch 16, wobei bei (a) das Steuergerät dazu dient, der Anzeige mitzuteilen, eine Lichtstärke abzugeben, und wobei bei (c) das mindestens eine Steuergerät dazu dient festzustellen, ob mindestens eine Lichtquelle, die mit der Anzeige verbunden ist, zu ersetzen ist.

18. Verfahren nach einem der Ansprüche 15 bis 17, wobei das mindestens eine Steuergerät dazu dient, mindestens eine Softwareanwendung, die über die Anzeige Ausgaben erzeugt, auszuführen, wobei bei (a) der mindestens eine Testbereich keine Ausgaben enthält, die als Reaktion auf die mindestens eine Anwendung erzeugt werden.

## Revendications

1. Appareil de guichet automatique bancaire (10), comprenant :
une interface utilisateur, l'interface utilisateur comportant au moins un dispositif d'entrée (16) et au moins un dispositif de sortie (42),
ledit dispositif de sortie comportant un dispositif d'affichage comprenant un écran d'affichage (14, 28, 62) ;
au moins un distributeur de billets ;
au moins un capteur d'affichage (26, 44, 64),
ledit capteur d'affichage étant destiné à détecter des sorties affichées dans au moins une zone de test (30) de l'écran d'affichage ;
au moins un contrôleur (60), et :
ledit contrôleur étant connecté fonctionnellement audit distributeur de billets, au dispositif d'affichage et audit capteur d'affichage,
ledit contrôleur étant destiné à ordonner au dispositif d'affichage d'afficher au moins une séquence de couleurs dans un ordre particulier dans ladite zone de test de l'écran d'affichage, et ledit contrôleur étant destiné à déterminer si ladite séquence de couleurs a été affichée conformément à l'ordre particulier et, en réponse à une détermination négative, ledit contrôleur étant destiné à provoquer la génération d'un signal d'erreur de diagnostic d'affichage ;
un bandeau de guichet automatique bancaire (12),
ledit capteur d'affichage sous-tendant le bandeau ;
au moins une source lumineuse qui est destinée à rétroéclairer le dispositif d'affichage,
ladite source lumineuse étant connectée fonctionnellement audit contrôleur, et
ledit contrôleur étant destiné à provoquer des changements de sortie par ladite source lumineuse ;
au moins un capteur de lumière ambiante (34, 66) connecté fonctionnellement audit contrôleur,
ledit contrôleur étant destiné à provoquer un changement de sortie de ladite source lumineuse en réponse à des changements de lumière détectés par ledit capteur de lumière ambiante ; et ledit capteur de lumière ambiante étant placé dans une relation sus-jacente par rapport audit capteur d'affichage.

2. Appareil selon la revendication 1, dans lequel ladite séquence comprend une pluralité de couleurs différentes, ledit contrôleur étant destiné à déterminer si les sorties affichées dans ladite zone de test correspondent à ladite séquence.

3. Appareil selon la revendication 2, dans lequel ledit contrôleur est destiné à déterminer si les sorties affichées dans ladite zone de test correspondent à une séquence d'au moins trois couleurs.

4. Appareil selon la revendication 1, dans lequel ledit contrôleur est destiné à tester ladite source lumineuse en amenant ladite source lumineuse à délivrer une intensité, à détecter une sortie de ladite source lumineuse avec ledit capteur d'affichage et à déterminer, en réponse à ladite sortie de source lumineuse délivrée en réponse à la commande d'intensité, si ladite source lumineuse doit être remplacée.

5. Appareil selon la revendication 4, dans lequel l'étape consistant à tester ladite source lumineuse comprend : amener, par le contrôleur, ladite source lumineuse à produire une sortie lumineuse maximale.

6. Appareil selon la revendication 4 ou la revendication 5, dans lequel ledit contrôleur est destiné à provoquer l'envoi d'un message à une unité de service distante en réponse à une détermination que ladite source lumineuse doit être remplacée.

7. Appareil selon l'une quelconque des revendications précédentes, dans lequel le contrôleur est destiné à provoquer l'envoi d'un message à une unité de service distante en réponse à une détermination que les sorties affichées dans la zone de test ne correspondent pas à ladite séquence.

8. Appareil selon l'une quelconque des revendications précédentes, dans lequel ladite séquence comprend un schéma changeant d'ordre de couleurs.

9. Appareil selon la revendication 8, dans lequel ladite séquence comprend un schéma changeant comportant différentes couleurs.

10. Appareil selon l'une quelconque des revendications précédentes, dans lequel ledit capteur d'affichage est destiné à détecter des sorties d'affichage par l'intermédiaire d'un miroir.

11. Appareil selon l'une quelconque des revendications précédentes, dans lequel ledit capteur d'affichage est destiné à détecter des sorties d'affichage par l'intermédiaire d'au moins un dispositif de commande lumineuse.

12. Appareil selon la revendication 11, dans lequel ledit dispositif de commande lumineuse comprend un fil fibre optique.

13. Appareil selon l'une quelconque des revendications précédentes, dans lequel l'écran d'affichage comprend un écran tactile, au moins une zone de test sous-tendant une zone effleurable par l'utilisateur de l'écran tactile.

14. Appareil selon l'une quelconque des revendications précédentes, comprenant en outre une pluralité de dispositifs de fonction de transaction, ledit contrôleur étant connecté fonctionnellement à la pluralité de dispositifs de fonction de transaction et ledit contrôleur étant destiné à varier ladite séquence en réponse à un état d'au moins un dispositif de fonction de transaction autre que le dispositif d'affichage.

15. Procédé comprenant les étapes suivantes :
(a) opérer au moins un contrôleur (60) situé dans un guichet automatique bancaire (10) comportant un distributeur de billets, pour ordonner à un écran (14, 28, 62) sur une interface utilisateur de la machine de produire des sorties dans au moins une zone de test (30) de l'écran, les sorties comprenant au moins une séquence de couleurs dans un ordre particulier, le guichet automatique bancaire renfermant un bandeau de guichet automatique bancaire (12), au moins une source lumineuse conçue pour rétroéclairer l'écran, et au moins un capteur de lumière ambiante (34, 66) connecté fonctionnellement audit contrôleur, au moins un capteur d'affichage (26, 44, 64) sous-tendant le bandeau, et ledit capteur de lumière ambiante étant placé dans une relation sus-jacente par rapport audit capteur d'affichage ;
(b) détecter des sorties d'affichage dans ladite zone de test de l'écran avec ledit capteur d'affichage ;
(c) analyser les sorties d'affichage par l'intermédiaire dudit contrôleur pour déterminer si l'écran fonctionne correctement en déterminant si ladite séquence de couleurs a été affichée selon l'ordre particulier ;
(d) en réponse à une détermination négative à l'étape (c), générer un signal d'erreur de diagnostic ; et
(e) ledit contrôleur provoquant un changement de sortie de ladite source lumineuse en réponse à des changements de lumière détectés par ledit capteur de lumière ambiante.

16. Procédé selon la revendication 15, dans lequel ladite sortie comprend au moins un schéma.

17. Procédé selon la revendication 15 ou la revendication 16 dans lequel, à l'étape (a), le contrôleur est destiné à ordonner à l'écran de produire un niveau de lumière, ledit contrôleur étant destiné, à l'étape (c), à déterminer si au moins une source lumineuse associée à l'écran doit être remplacée.

18. Procédé selon l'une quelconque des revendications 15 à 17, dans lequel ledit contrôleur est destiné à exécuter au moins une application logicielle produisant des sorties par l'intermédiaire de l'écran, ladite zone de test, à l'étape (a), ne comprenant pas de sorties produites en réponse à ladite application.
